(19) Europäisches Patentamt
European Patent Office
Office européen des brevets

(11) **EP 3 894 766 B1**

(12) **EUROPÄISCHE PATENTSCHRIFT**

(45) Veröffentlichungstag und Bekanntmachung des Hinweises auf die Patenterteilung:
**16.11.2022 Patentblatt 2022/46**

(21) Anmeldenummer: **19817214.0**

(22) Anmeldetag: **04.12.2019**

(51) Internationale Patentklassifikation (IPC):
**F25D 21/00** *(2006.01)*  **F25D 21/08** *(2006.01)*

(52) Gemeinsame Patentklassifikation (CPC):
**F25D 21/006; F25B 49/025; F25D 21/08; F25D 21/14;** F25B 2600/021; F25B 2600/0253; F25B 2700/2104; Y02B 30/70; Y02B 40/00

(86) Internationale Anmeldenummer:
**PCT/EP2019/083595**

(87) Internationale Veröffentlichungsnummer:
**WO 2020/120240 (18.06.2020 Gazette 2020/25)**

(54) **KÄLTEGERÄT UND VERFAHREN ZUM INITIALISIEREN EINES ABTAUVORGANGS IN EINEM KÄLTEGERÄT**

REFRIGERATION APPLIANCE AND METHOD FOR INITIALISING A DEFROSTING OPERATION IN A REFRIGERATION APPLIANCE

APPAREIL FRIGORIFIQUE ET PROCÉDÉ POUR INITIALISER UNE OPÉRATION DE DÉGIVRAGE DANS UN APPAREIL FRIGORIFIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.12.2018 DE 102018221328**

(43) Veröffentlichungstag der Anmeldung:
**20.10.2021 Patentblatt 2021/42**

(73) Patentinhaber: **BSH Hausgeräte GmbH**
**81739 München (DE)**

(72) Erfinder:
• ESCHNER, Torsten
89073 Ulm (DE)
• HÄRLEN, Jochen
89551 Königsbronn (DE)

(56) Entgegenhaltungen:
EP-A1- 2 743 615   DE-A1- 4 243 634
US-A- 4 850 200   US-A- 6 047 554

**Beschreibung**

Die vorliegende Erfindung betrifft ein Verfahren zum Initialisieren eines Abtauvorgangs in einem Kältegerät, insbesondere einem Haushaltskältegerät, sowie ein Kältegerät, in dem das Verfahren anwendbar ist.

Da auf einem Verdampfer niedergeschlagener Reif den Wärmeübergang von einer Lagerkammer eines Kältegeräts zu dem Verdampfer beeinträchtigt, werden bei einem herkömmlichen Kältegerät mit einem nur zwischen Ein- und Ausschaltzustand umschaltbaren Verdichter die Einschaltphasen des Verdichters mit zunehmender Dicke der Reifschicht immer länger. Bei einem solchen Kältegerät ist ein gebräuchliches, z.B. in KR 20010037545 beschriebenes Verfahren zum Entscheiden über die Notwendigkeit eines Abtauvorgangs, die kumulierte Laufzeit des Verdichters und die Zahl der Türöffnungen seit dem letzten Abtauen zu überwachen und einen Abtauvorgang zu starten, wenn ein vorgegebener Grenzwert überschritten ist.

Moderne Kältegeräte verwenden vielfach Verdichter, deren Drehzahl auf mehrere nichtverschwindende Werte einstellbar ist, im Folgenden auch als drehzahlgeregelte Verdichter bezeichnet. Bei diesen Kältegeräten ist der oben geschilderte herkömmliche Ansatz unbefriedigend, denn da die Rate der Reifbildung auf dem Verdampfer von der Drehzahl abhängt, ist eine Abschätzung anhand der kumulierten Verdichterlaufzeit nicht mehr möglich. US 6 047 554 schlägt vor, in einem solchen Fall eine gewichtete kumulierte Laufzeit zu ermitteln, in die Betriebszeiten mit unterschiedlichen Drehzahlen unterschiedlich gewichtet eingehen. Eine sichere Abschätzung der Reifdicke setzt hier allerdings voraus, dass der Zusammenhang zwischen Verdichterdrehzahl und Rate der Reifbildung bekannt und reproduzierbar ist.

Eine Aufgabe der vorliegenden Erfindung ist, ein Verfahren zum Initialisieren eines Abtauvorgangs anzugeben, das einfach anwendbar ist, eine zuverlässige Einschätzung der Reifdicke erlaubt und für ein Kältegerät mit drehzahlgeregeltem Verdichter geeignet ist.

Die Aufgabe wird gelöst durch ein Verfahren mit den Schritten

    a) Inbetriebnehmen des Verdichters mit einer auf einen Initialwert no eingestellten Drehzahl,
    b) Anpassen der Drehzahl $n_t$ des Verdichters um ein Abdriften der Temperatur einer Lagerkammer des Kältegeräts von einer Solltemperatur zu verhindern,
    c) Überwachen einer Abweichung zwischen der angepassten Drehzahl $n_t$ und dem Initialwert no, und
    d) Entscheiden, dass ein Abtauen nötig ist, wenn die Abweichung einen Grenzwert überschreitet.

Das Anpassen der Drehzahl ist typischerweise ein kontinuierlicher Vorgang, bei dem die Drehzahl jeweils zwischen einem Wert, der geringfügig über einem dem Kältebedarf des Geräts entsprechenden, aber nicht exakt erreichbaren Idealwert liegt, und einem geringfügig darüberliegenden Wert jedesmal bei Erreichen einer Grenztemperatur umgeschaltet wird.

Von kurzfristigen Störungen wie etwa dem Öffnen einer Tür der Lagerkammer oder dem Einlegen von Kühlgut, dessen Temperatur von der Temperatur der Lagerkammer abweicht, abgesehen, sollte die Drehzahl des Verdichters im Wesentlichen von der Temperaturdifferenz zwischen Lagerkammer und Umgebung abhängen. Eine systematische Abweichung der Drehzahl kann dann auf eine den Wärmeübergang zwischen Lagerkammer und Verdampfer beeinträchtigende Bereifung zurückgeführt werden, so dass wenn diese Abweichung einen Grenzwert überschreitet, daraus geschlossen werden kann, dass die Reifschicht stark genug ist, um ein Abtauen erforderlich zu machen.

Die Abweichung kann im einfachsten Fall die aktuelle Differenz zwischen der angepassten Drehzahl $n_t$ und dem Initialwert no sein; bevorzugt ist allerdings, wenn auch in der Vergangenheit gemessene Differenzen einen Einfluss auf den momentanen Wert der Abweichung haben. Dadurch kann sich die Abweichung auch dann ändern, wenn die Differenz zwischen angepasster Drehzahl $n_t$ und dem Initialwert no konstant, aber von Null verschieden ist.

Das Überwachen der Abweichung sollte insbesondere wenigstens ein Erhöhen der Abweichung, wenn die angepasste Drehzahl $n_t$ über dem Initialwert no liegt, umfassen, so dass, wenn der Verdichter kontinuierlich mit einer Drehzahl über dem Initialwert läuft, der Grenzwert über kurz oder lang überschritten werden muss.

Um kurzfristigen Störungen besser Rechnung tragen zu können, sollte es auch möglich sein, die Abweichung in Zeiten, in denen die angepasste Drehzahl $n_t$ unter dem Initialwert no liegt, wieder zu vermindern.

Eine bevorzugte Möglichkeit hierfür ist, die Abweichung als Zeitintegral der Differenz $(n_t-no)$ zwischen der angepassten Drehzahl $n_t$ und dem Initialwert no zu ermitteln. Dieses Integral kann über die gesamte Laufzeit des Verdichters seit dem letzten Abtauvorgang gebildet werden. Denkbar ist aber auch, bestimmte Zeitspannen aus der Integralbildung auszuschließen, z. B. solche, in denen die Abweichung negativ ist oder zwischen Null und einem kleinen negativen Grenzwert liegt. Auf diese Weise kann sichergestellt werden, dass die Abweichung auch dann eine im Laufe der Zeit steigende Tendenz aufweist und zum Start eines Abtauvorgangs führt, wenn die angepasste Drehzahl $n_t$ nicht signifikant vom Initialwert no abweicht.

Das Anpassen der Drehzahl des Verdichters in Schritt b) umfasst zweckmäßigerweise ein Herabsetzen der Drehzahl $n_t$, wenn eine erste Grenztemperatur der Lagerkammer unterschritten wird, und ein Heraufsetzen der Drehzahl $n_t$, wenn eine zweite Grenztemperatur der Lagerkammer überschritten wird. Das Herauf- und Herabsetzen kann kontinuierlich oder in Form von diskreten Schritten erfolgen.

Der Initialwert $n_0$ kann jeweils im Laufe des Verfahrens empirisch ermittelt werden. Insbesondere kann jeweils in einer Anfangsphase des Betriebs nach einem Abtauvorgang eine Drehzahl ermittelt werden, die sich als zur Aufrechterhaltung der Solltemperatur in der Lagerkammer des Kältegeräts geeignet erweist, und von dieser Drehzahl kann der Initialwert no abgeleitet werden.

Im einfachsten Fall besteht das Ableiten darin, dass die ermittelte geeignete Drehzahl identisch als Initialwert $n_0$ übernommen wird.

Sofern man davon ausgeht, dass die Temperatur der Umgebung, in der das Kältegerät aufgestellt ist, sich im Laufe mehrerer Abtauzyklen nicht wesentlich ändert, kann als Initialwert no auch ein Mittelwert der nach dem letzten Abtauvorgang ermittelten geeigneten Drehzahl und der nach einem oder mehreren früheren Abtauvorgängen ermittelten geeigneten Drehzahlen gebildet werden.

Des Weiteren ist es denkbar, die ermittelte geeignete Drehzahl um ein vorgegebenes Maß zu vermindern und das Ergebnis als Initialwert no zu übernehmen, um auf diesem Wege sicherzustellen, dass die Abweichung im Laufe der Zeit anwächst und somit ein Abtauvorgang mit Gewissheit ausgelöst wird, oder - mit gleichem Ergebnis - den Grenzwert als eine abnehmende Funktion der Verdichterlaufzeit seit dem letzten Abtauvorgang wählen.

Alternativ kann der Initialwert no als Funktion der Umgebungstemperatur vorgegeben sein. Um diese zu erfassen, sollte ein Kältegerät, in dem das erfindungsgemäße Verfahren angewandt wird, mit einem Umgebungstemperatursensor ausgestattet sein.

Im einfachsten Fall wird als Argument der Funktion die am Ende eines Abtauvorgangs gemessene Umgebungstemperatur verwendet; dann bleibt der Initialwert no bis zum nächsten Abtauvorgang unverändert.

Ein Vorteil der Alternative ist allerdings, dass der Initialwert no auch Funktion der momentanen Umgebungstemperatur, also zwischen zwei Abtauvorgängen veränderlich sein kann. So kann vermieden werden, dass eine Zunahme der Verdichterdrehzahl $n_t$, die auf eine Steigerung der Umgebungstemperatur zurückgeht, als Hinweis auf eine starke Reifbildung fehlinterpretiert wird und zu einem vorzeitigen Abtauen führt.

Um sicherzustellen, dass auch bei im Mittel gleichbleibender Verdichterdrehzahl $n_t$ über kurz oder lang ein Abtauvorgang ausgelöst wird, kann ferner der Grenzwert als eine abnehmende Funktion der Verdichterlaufzeit seit dem letzten Abtauvorgang gewählt werden.

Gegenstand der Erfindung ist ferner ein Kältegerät, insbesondere ein Haushaltskältegerät, mit wenigstens einer Lagerkammer, einem drehzahlgeregelten Verdichter zum Kühlen der Lagerkammer und einer Steuereinheit zum Regeln der Drehzahl des Verdichters anhand einer in der Lagerkammer gemessenen Temperatur, die eingerichtet und insbesondere programmiert ist, um das oben beschriebene Verfahren auszuführen.

Weiterer Erfindungsgegenstand ist ein Computerprogramm-Produkt mit Programmcode-Mitteln, die einen Computer befähigen, das oben beschriebene Verfahren auszuführen oder als eine Steuereinheit in dem oben beschriebenen Kältegerät zu arbeiten. Das Computerprogramm-Produkt kann insbesondere als Speicherinhalt eines Mikroprozessorsystems oder, in von dem Mikroprozessorsystem losgelöster Form, auf einem Datenträger, vorliegen.

Weitere Merkmale und Vorteile der Erfindung ergeben sich aus der nachfolgenden Beschreibung von Ausführungsbeispielen unter Bezugnahme auf die beigefügten Zeichnungen. Es zeigen:

Fig. 1    in schematischer Form ein Kältegerät gemäß der vorliegenden Erfindung;

Fig. 2    ein Flussdiagramm eines Verfahrens gemäß einer ersten Ausgestaltung der Erfindung; und

Fig. 3    ein Flussdiagramm eines Verfahrens gemäß einer zweiten Ausgestaltung der Erfindung

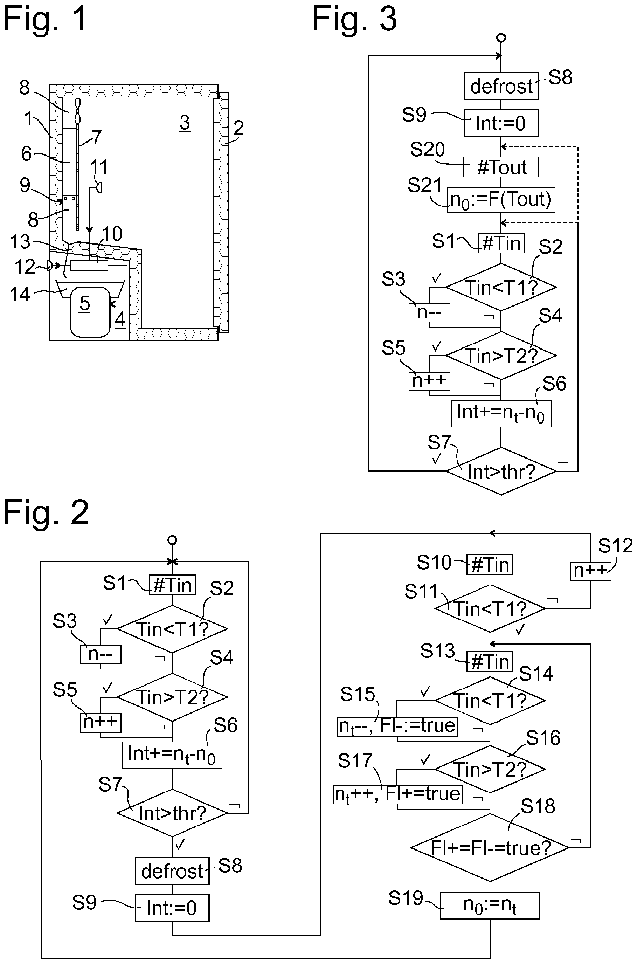

Fig. 1 zeigt einen schematischen Schnitt durch ein Haushaltskältegerät von an sich bekanntem Aufbau. Ein wärmeisolierender Korpus 1 und wenigstens eine Tür 2 begrenzen wenigstens eine Lagerkammer 3. In einem Maschinenraum 4 des Korpus 1 ist ein drehzahlgeregelter Verdichter 5 untergebracht, der mit einem nicht gezeigten Verflüssiger, einer Drosselstelle und wenigstens einem Verdampfer 6 in einem Kältemittelkreis verbunden ist und den Verdampfer 6 mit flüssigem Kältemittel zum Kühlen der Lagerkammer 3 versorgt.

Der Verdampfer 6 ist hier als ein No-Frost-Verdampfer in einer von der Lagerkammer durch eine Zwischenwand 7 abgetrennten Verdampferkammer 8 dargestellt. Eine Abtauheizung 9 kann hier durch einen Heizstab gebildet sein, der an einer Unterseite des blockförmigen Verdampfers 6 montiert ist und diesen beim Abtauen durch körperlichen Kontakt, Strahlung und/oder Konvektion beheizt. Ein Durchgang 13 ist am Boden der Verdampferkammer 8 vorgesehen, um Tauwasser vom Verdampfer 6 ins Freie, typischerweise in eine Verdunstungsschale 14 im Maschinenraum 4, abzuleiten.

Eine Steuerschaltung 10, typischerweise ein Mikroprozessorsystem, die den Betrieb des Verdichters 5 und der Abtauheizung 9 steuert, kann am Korpus 1 an beliebiger geeigneter Stelle platziert sein. Die Steuerschaltung 10 ist mit einem Innentemperatursensor 11 zum Erfassen der Temperatur der Lagerkammer 3 verbunden, ferner kann ein Umgebungstemperatursensor 12 zum Erfassen der Umgebungstemperatur mit der Steuerschaltung 10 verbunden sein.

Fig. 2 zeigt ein Arbeitsverfahren der Steuerschaltung 10 gemäß einer ersten Ausgestaltung der Erfindung. Dieses Arbeitsverfahren erfordert nicht den Umgebungstemperatursensor 12.

Im Normalbetrieb durchläuft die Steuerschaltung 10 in regelmäßigen Zeitabständen eine Schleife, deren erster Schritt S1 in der Darstellung der Fig. 2 das Erfassen der Innentemperatur Tin mit Hilfe des Temperatursensors 11 ist. Diese Innentemperatur Tin soll nahe einer vom Benutzer an der Steuerschaltung 10 eingestellten Solltemperatur gehalten werden. Dazu vergleicht die Steuerschaltung 10 in Schritt S2 die Innentemperatur Tin mit einer ersten Grenztemperatur T1, die mit der Solltemperatur identisch sein kann, vorzugsweise aber um wenige Grad niedriger ist. Ist die Grenztemperatur T1 unterschritten, so deutet dies darauf hin, dass die momentane Drehzahl $n_t$ des Verdichters 5 höher ist, als zum Aufrechterhalten der Solltemperatur erforderlich; deswegen wird in diesem Fall die Drehzahl $n_t$ um eine vorgegebene Schrittweite dekrementiert (S3).

In Schritt S4 wird die Innentemperatur Tin mit einer zweiten Grenztemperatur T2 verglichen, und im Falle der Überschreitung von T2 wird die Drehzahl $n_t$ in Schritt S5 dekrementiert. Die Schrittweiten können in Schritt S3 und S5 dieselben sein, müssen es aber nicht. Die zweite Solltemperatur T2 kann ebenfalls mit der Solltemperatur identisch sein, liegt typischerweise aber geringfügig höher, so dass T1 und T2 ein Temperaturintervall von wenigen Grad Breite definieren, innerhalb dessen die Drehzahl $n_t$ nicht verändert wird.

In Schritt S6 wird die Differenz zwischen der momentanen Drehzahl $n_t$ des Verdichters 5 und einem Initialwert no zu einer Steuergröße Int hinzuaddiert. Da mit zunehmender Dicke einer Reifschicht auf dem Verdampfer 6 die zum Halten der Lagerkammer 3 auf der Solltemperatur benötigte Verdichterdrehzahl anwächst, neigt diese Differenz dazu, um so stärker positive Werte anzunehmen, je länger der letzte Abtauvorgang zurückliegt, so dass die Steuergröße Int im Laufe der Zeit anwächst.

Solange in Schritt S7 festgestellt wird, dass die Steuergröße Int einen Schwellwert thr noch nicht überschritten hat, kehrt das Verfahren zum Ausgang zurück, und die Schleife der Schritte S1 bis S6 wird wiederholt.

Ist hingegen die Schwelle thr überschritten, dann schaltet die Steuerschaltung 10 die Abtauheizung 9 und den Verdichter 5 aus, um den Verdampfer 6 abzutauen (S8).

Nach erfolgtem Abtauen wird die Steuergröße Int auf einen Anfangswert, der kleiner ist als thr, typischerweise auf Null, zurückgesetzt (S9), und der Verdichter 5 wird wieder in Betrieb genommen.

Die Drehzahl bei Wiederaufnahme des Betriebs kann ein fester Standardwert sein, denkbar ist auch, den Betrieb mit der Drehzahl wieder aufzunehmen, bei der er abgebrochen wurde, um das Abtauen durchzuführen. In letzterem Fall wird die Drehzahl meist höher sein, als zum Halten der Lagerkammer 3 auf der Solltemperatur im Dauerbetrieb erforderlich; dies ist allerdings auch zweckmäßig, um in kurzer Zeit die Wärme wieder aus der Lagerkammer 3 zu beseitigen, die während des Abtauens hineingelangt ist.

Die Temperatur Tin der Lagerkammer 3 wird in Schritt S10 gemessen und anschließend in Schritt S11 mit T1 verglichen. Wegen der vorhergegangenen Unterbrechung des Kühlbetriebs und dem unvermeidlichen Wärmeeintrag durch das Abtauen wird die Temperatur Tin unmittelbar nach der Wiederinbetriebnahme des Verdichters über T1 liegen, so dass die Schritte S10, S11 solange wiederholt werden, bis T1 unterschritten wird. Wenn wie oben beschrieben die Wiederanlaufdrehzahl des Verdichters 5 mit Sicherheit höher gewählt wurde, als zum Aufrechterhalten der Solltemperatur notwendig, genügt es, die Schritte S10, S11 zu wiederholen, anderenfalls kann vorgesehen werden, dass solange T1 noch nicht erreicht ist, die Drehzahl schrittweise erhöht wird (S12). Im einen wie im anderen Falle ist zu dem Zeitpunkt, an dem Tin unter T1 abfällt, die Drehzahl $n_t$ höher als zum Aufrechterhalten der Solltemperatur notwendig.

Die Temperatur Tin wird auch nach dem Unterschreiten von T1 weiterhin gemessen (S13) und mit T1 verglichen (S14). Wenn T1 unterschritten bleibt, wird in jeder Wiederholung von Schritt S15 die Drehzahl $n_t$ des Verdichters 5 dekrementiert, außerdem wird ein Flag Fl- gesetzt, um anzuzeigen, dass T1 nach dem Wiederanlaufen des Verdichters 5 unterschritten wurde.

Das Dekrementieren der Drehzahl $n_t$ hat zur Folge, dass über kurz oder lang T2 wieder überschritten wird. Sobald dies in Schritt S16 erkannt wird, wird ein zweites Flag Fl+ gesetzt (S17), um die Überschreitung anzuzeigen, und die Drehzahl $n_t$ wird wieder inkrementiert. Sobald in Schritt S18 erkannt wird, dass beide Flags Fl-, Fl+ gesetzt sind, wird die Schleife der Schritte S13-S8 abgebrochen.

Die zu diesem Zeitpunkt eingestellte Drehzahl $n_t$ wird in Schritt S19 als Initialwert no festgelegt, anschließend kehrt das Verfahren zum Normalbetrieb, d.h. der Schleife von Schritt S1 bis S7, zurück.

Da auf diese Weise für $n_0$ ein geringfügig kleinerer Wert gewählt wird, als zum Halten der Solltemperatur erforderlich, ist die Differenz $n_t - n_0$ während des Normalbetriebs öfter positiv als negativ. So ist sichergestellt, dass die Steuergröße Int langfristig anwächst, und dass über kurz oder lang ein erneuter Abtauvorgang ausgelöst wird. Je schneller sich Reif am Verdampfer 6 neu bildet und deswegen die Drehzahl $n_t$ heraufgesetzt wird, umso schneller wächst die Größe Int an, und umso schneller wird erneut abgetaut.

Fig. 3 zeigt ein Flussdiagramm eines Arbeitsverfahrens gemäß einer zweiten Ausgestaltung der Erfindung. Die Darstellung des Verfahrens setzt hier ein mit einem Schritt des Abtauens des Verdampfers 6. Dieser Schritt ist mit dem Schritt S8 des Verfahrens aus Fig. 2 identisch und deswegen ebenfalls mit S8 bezeichnet. Auch der anschließende Schritt S9 des Rücksetzens der Steuergröße Int ist identisch.

Es folgt ein Schritt S20 des Messens der Umgebungstemperatur Tout mit Hilfe des Sensors 12. Eine Funktion F, die einer gemessenen Umgebungstemperatur Tout jeweils eine Drehzahl des Verdichters 5 zuordnet, ist in der Steuereinheit 10 in Form einer Nachschlagetabelle oder einer Rechenvorschrift hinterlegt. Anhand dieser Funktion F und der gemessenen Temperatur Tout wird in Schritt S21 ein angemessener Initialwert no für die Drehzahl beim Wiederanlaufen des Verdichters 5 nach dem Abtauen festgelegt. Die Funktion F kann so definiert sein, dass sie jedem Wert der Umgebungstemperatur Tout genau diejenige Drehzahl zuordnet, die sich im stationären Betrieb bei unbereiftem Verdampfer 6 für die betreffende Umgebungstemperatur bei wiederholter Ausführung der oben beschriebenen Schritte S1-S5 ergeben würde; in diesem Fall könnte der Verdichter theoretisch beliebig lange ohne Abtauen durchlaufen, wenn die Tür 2 nicht geöffnet und auch auf anderem Wege keine Feuchtigkeit in die Lagerkammer 3 gelangt, die sich als Reif auf dem Verdampfer niederschlagen könnte.

Denkbar ist aber auch, wie oben in Verbindung mit Fig. 2 beschrieben, die Werte von F jeweils geringfügig kleiner zu wählen, um so sicherzustellen, dass auch ohne dass die Drehzahl $n_t$ im Laufe der Zeit anwächst, nach einer endlichen Laufzeit des Verdichters 5 abgetaut wird.

Dieselbe Wirkung könnte auch dadurch erreicht werden, dass der Schwellwert thr zeitabhängig vermindert wird, z.B. indem in die Schleife S1-S7 ein Schritt des Dekrementierens von thr eingefügt wird.

Nach Festlegung des Initialwerts no wird die Temperatur Tin der Lagerkammer 3 erfasst; dieser Schritt ist mit dem Schritt S1 aus Fig. 2 identisch und daher auch mit S1 bezeichnet. Auch die nachfolgenden Schritte S2 - S7 sind dieselben wie in Fig. 2 und werden daher hier nicht erneut beschrieben. Wenn sich in Schritt S7 herausstellt, dass die Steuergröße Int den Schwellwert thr überschritten hat, verzweigt das Verfahren zu S8, um den Verdampfer 6 abzutauen.

Wenn der Schwellwert thr in Schritt S7 noch nicht erreicht ist, kehrt das Verfahren einer ersten Variante zufolge zu Schritt S1 zurück, um erneut die Temperatur Tin zu messen, so dass nach wiederholtem Durchlaufen der Schleife S1-S7 die Steuergröße Int das Integral

$$\int n_t - n_0 \, dt$$

approximiert, wobei $n_0 = F(Tout(t_0))$, d.h. der Wert von F ist, der der Temperatur Tout zum Zeitpunkt $t_0$ der Wiederaufnahme des Verdichterbetriebs entspricht.

Wenn während einer Betriebsphase des Verdichters 5 die Umgebungstemperatur aboder zunimmt, dann führt dies über die Schritte S2 bzw. S4 zu einer Verminderung bzw. Steigerung der Drehzahl $n_t$. Eine Verminderung hätte zur Folge, dass die Steuergröße Int langsamer anwächst als bei gleichbleibender Umgebungstemperatur und dass folglich ein Abtauvorgang hinausgezögert wird, auch wenn der Reif auf dem Verdampfer 6 bereits wieder eine Dicke erreicht hat, bei der ein Abtauen sinnvoll wäre; umgekehrt kann eine Steigerung der Umgebungstemperatur ein vorzeitiges Abtauen auslösen. Um dies zu vermeiden, springt einer zweiten Variante zufolge das Verfahren, wenn der Schwellwert thr in Schritt S7 noch nicht erreicht ist, zurück zum Schritt S21, d.h. die Umgebungstemperatur Tout wird gemessen, und no wird anhand der gemessenen Temperatur aktualisiert: $n_0(t) = F(Tout(t))$, wobei t jeweils der gegenwärtige Zeitpunkt ist. Auf diese Weise kann die Zeitspanne zwischen zwei Abtauvorgängen von Schwankungen der Umgebungstemperatur Tout unabhängig gemacht werden.

## BEZUGSZEICHEN

| | |
|---|---|
| 1 | Korpus |
| 2 | Tür |
| 3 | Lagerkammer |
| 4 | Maschinenraum |
| 5 | Verdichter |
| 6 | Verdampfer |
| 7 | Zwischenwand |
| 8 | Verdampferkammer |
| 9 | Abtauheizung |
| 10 | Steuerschaltung |
| 11 | Innentemperatursensor |
| 12 | Umgebungstemperatursensor |
| 13 | Durchgang |
| 14 | Verdunstungsschale |

## Patentansprüche

1. Verfahren zum Initialisieren eines Abtauvorgangs in einem Kältegerät mit drehzahlgeregeltem Verdichter (5), mit den Schritten

   a) Inbetriebnehmen (S10-S19; S21) des Verdichters (5) mit einer auf einen Initialwert no eingestellten Drehzahl,
   b) Anpassen (S3, S5) der Drehzahl $n_t$ des Verdichters (5), um ein Abdriften der Temperatur (Tin) einer Lagerkammer (3) des Kältegeräts von einer Solltemperatur zu verhindern,
   c) Überwachen (S6) einer Abweichung zwischen der angepassten Drehzahl $n_t$ und dem Initialwert no, und
   d) Entscheiden (S7), dass ein Abtauen nötig ist, wenn die Abweichung einen Grenzwert überschreitet.

2. Verfahren nach Anspruch 1, bei dem das Überwachen (S6) ein Erhöhen der Abweichung, wenn die angepasste Drehzahl $n_t$ über dem Initialwert no liegt, umfasst.

3. Verfahren nach Anspruch 1 oder 2, bei dem das Überwachen (S6) ein Vermindern der Abweichung umfasst, wenn die angepasste Drehzahl $n_t$ unter

dem Initialwert no liegt.

**4.** Verfahren nach einem der vorhergehenden Ansprüche, bei dem die Abweichung als Zeitintegral der Differenz ($n_t$-$n_0$) zwischen der angepassten Drehzahl $n_t$ und dem Initialwert no ermittelt wird (S6) oder das Zeitintegral der Differenz ($n_t$-$n_0$) einer von mehreren Termen ist, die aufsummiert werden, um die Abweichung zu bilden.

**5.** Verfahren nach einem der vorhergehenden Ansprüche, bei dem das Anpassen der Drehzahl $n_t$ des Verdichters (5) in Schritt b) ein Herabsetzen (S3) der Drehzahl $n_t$, wenn eine erste Grenztemperatur (T1) der Lagerkammer (3) unterschritten wird (S2), und ein Heraufsetzen (S5) der Drehzahl $n_t$, wenn eine zweite Grenztemperatur (T2) der Lagerkammer (3) überschritten wird (S4), umfasst.

**6.** Verfahren nach einem der Ansprüche 1 bis 5, bei dem in Schritt a) eine Drehzahl ermittelt wird, die in einer Anfangsphase des Betriebs nach einem Abtauvorgang sich als geeignet erweist, um ein Abdriften der Temperatur (Tin) in der Lagerkammer (3) des Kältegeräts von der Solltemperatur zu verhindern, und der Initialwert no von dieser geeigneten Drehzahl abgeleitet wird (S19).

**7.** Verfahren nach einem der Ansprüche 1 bis 5, bei dem der Initialwert no als Funktion (F(Tout)) einer Umgebungstemperatur (Tout) vorgegeben ist.

**8.** Verfahren nach Anspruch 7, bei dem der Initialwert no eine Funktion der momentanen Umgebungstemperatur (Tout(t)) ist.

**9.** Verfahren nach einem der vorhergehenden Ansprüche, bei dem der Grenzwert (thr) eine abnehmende Funktion der Verdichterlaufzeit seit dem letzten Abtauvorgang ist.

**10.** Kältegerät, insbesondere Haushaltskältegerät, mit wenigstens einer Lagerkammer (3), einem drehzahlgeregelten Verdichter (5) zum Kühlen der Lagerkammer (3) und einer Steuereinheit (10) zum Regeln der Drehzahl (nt) des Verdichters (5) anhand einer in der Lagerkammer (3) gemessenen Temperatur (Tin), **dadurch gekennzeichnet, dass** die Steuereinheit (10) eingerichtet und insbesondere programmiert ist, um das Verfahren nach einem der vorhergehenden Ansprüche auszuführen.

**11.** Computerprogramm-Produkt mit Programmcode-Mitteln, die einen Computer befähigen, das Verfahren nach einem der Ansprüche 1 bis 9 auszuführen oder als eine Steuereinheit in einem Kältegerät nach Anspruch 10 zu arbeiten.

**Claims**

**1.** Method for initialising a defrosting procedure in a refrigeration appliance with variable speed compressor (5), with the steps

a) starting up (S10-S19; S21) the compressor (5) with a rotational speed set to an initial value no,
b) adapting (S3, S5) the rotational speed $n_t$ of the compressor (5), in order to prevent the temperature (Tin) of a storage chamber (3) of the refrigeration appliance from drifting from a setpoint temperature,
c) monitoring (S6) a deviation between the adapted rotational speed $n_t$ and the initial value no, and
d) deciding (S7) that a defrosting is necessary when the deviation exceeds a limit value.

**2.** Method according to claim 1, in which the monitoring (S6) comprises increasing the deviation, if the adapted rotational speed $n_t$ lies above the initial value no.

**3.** Method according to claim 1 or 2, in which the monitoring (S6) comprises reducing the deviation, if the adapted rotational speed $n_t$ lies below the initial value no.

**4.** Method according to one of the preceding claims, in which the deviation is ascertained (S6) as a time integral of the difference (nt - no) between the adapted rotational speed $n_t$ and the initial value no or the time integral of the difference (nt - no) of one of a plurality of terms that are summed to form the deviation.

**5.** Method according to one of the preceding claims, in which the adapting of the rotational speed $n_t$ of the compressor (5) in step b) comprises a lowering (S3) of the rotational speed $n_t$ in the event of falling below (S2) a first limit temperature (T1) of the storage chamber (3), and raising (S5) the rotational speed $n_t$ in the event of exceeding (S4) a second limit temperature (T2) of the storage chamber (3).

**6.** Method according to one of claims 1 to 5, in which in step a) a rotational speed is ascertained which, in a starting phase of the operation after a defrosting procedure, proves to be suitable for preventing the temperature (Tin) in the storage chamber (3) of the refrigeration appliance from drifting from the setpoint temperature, and the initial value no is derived (S19) from said suitable rotational speed.

**7.** Method according to one of claims 1 to 5, in which the initial value no is predefined as a function (F(Tout)) of an ambient temperature (Tout).

8. Method according to claim 7, in which the initial value no is a function of the instantaneous ambient temperature (Tout(t)).

9. Method according to one of the preceding claims, in which the limit value (thr) is a decreasing function of the compressor runtime since the last defrosting procedure.

10. Refrigeration appliance, in particular household refrigeration appliance, with at least one storage chamber (3), a variable-speed compressor (5) for cooling the storage chamber (3) and a control unit (10) for regulating the rotational speed (nt) of the compressor (5) on the basis of a temperature (Tin) measured in the storage chamber (3), **characterised in that** the control unit (10) is configured and in particular is programmed to carry out the method according to one of the preceding claims.

11. Computer program product with program code means that enable a computer to carry out the method according to one of claims 1 to 9 or to operate as a control unit in a refrigeration appliance according to claim 10.

**Revendications**

1. Procédé pour initialiser une opération de dégivrage dans un appareil frigorifique comprenant un compresseur à vitesse de rotation régulée (5), le procédé comprenant les étapes suivantes :

   a) mise en service (S10-S19, S21) du compresseur (5) à une vitesse de rotation réglée à une valeur initiale no,
   b) adaptation (S3, S5) de la vitesse de rotation $n_t$ du compresseur (5), pour empêcher une dérive de la température (Tin) d'une chambre de stockage (3) de l'appareil frigorifique par rapport à une température de consigne,
   c) surveillance (S6) d'un écart entre la vitesse de rotation adaptée $n_t$ et la valeur initiale no, et
   d) décision (S7) de la nécessité d'un dégivrage lorsque l'écart dépasse une valeur limite.

2. Procédé selon la revendication 1, dans lequel la surveillance (S6) englobe une augmentation de l'écart, lorsque la vitesse de rotation adaptée $n_t$ est supérieure à la valeur initiale no.

3. Procédé selon la revendication 1 ou 2, dans lequel la surveillance (S6) englobe une diminution de l'écart, lorsque la vitesse de rotation adaptée $n_t$ est inférieure à la valeur initiale no.

4. Procédé selon l'une des revendications précédentes, dans lequel l'écart est déterminé (S6) sous forme d'une intégrale en fonction du temps de la différence ($n_t$-no) entre la vitesse de rotation adaptée $n_t$ et la valeur initiale no ou l'intégrale en fonction du temps de la différence ($n_t$-$n_0$) est l'un de plusieurs termes, qui sont additionnés pour former l'écart.

5. Procédé selon l'une des revendications précédentes, dans lequel l'adaptation de la vitesse de rotation $n_t$ du compresseur (5) dans l'étape b) comprend une réduction au minimum (S3) de la vitesse de rotation $n_t$ lorsqu'une première température limite (T1) de la chambre de stockage (3) est dépassée vers le bas (S2), et une augmentation (S5) de la vitesse de rotation $n_t$ lorsqu'une deuxième température limite (T2) de la chambre de stockage (3) est dépassée vers le haut (S4).

6. Procédé selon l'une des revendications 1 à 5, dans lequel, dans l'étape a), une vitesse de rotation est déterminée, qui s'avère appropriée dans une phase initiale de fonctionnement après une opération de dégivrage, pour empêcher une dérive de la température (Tin) dans la chambre de stockage (3) de l'appareil frigorifique par rapport à la température de consigne, et la valeur initiale no est déduite (S19) de cette vitesse de rotation appropriée.

7. Procédé selon l'une des revendications 1 à 5, dans lequel la valeur initiale no est prédéterminée sous forme d'une fonction (F(Tout)) d'une température ambiante (Tout).

8. Procédé selon la revendication 7, dans lequel la valeur initiale no est une fonction de la température ambiante instantanée (Tout(t)).

9. Procédé selon l'une des revendications précédentes, dans lequel la valeur limite (thr) est une fonction décroissante de la durée de fonctionnement du compresseur depuis la dernière opération de dégivrage.

10. Appareil frigorifique, en particulier, appareil frigorifique ménager, comprenant au moins une chambre de stockage (3), un compresseur (5) à vitesse de rotation régulée pour refroidir la chambre de stockage (3) et une unité de commande (10) pour réguler la vitesse de rotation (nt) du compresseur (5) en fonction d'une température (Tin) mesurée dans la chambre de stockage (3), **caractérisé en ce que** l'unité de commande (10) est configurée et en particulier programmée pour exécuter le procédé selon l'une des revendications précédentes.

11. Produit de programme informatique comprenant des moyens de code de programme, qui permettent à un ordinateur d'exécuter le procédé selon l'une des revendications 1 à 9 ou de fonctionner comme une unité de commande dans un appareil frigorifique selon la revendication 10.

# Fig. 1

# Fig. 3

# Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- KR 20010037545

- US 6047554 A